Europäisches Patentamt

European Patent Office

Office européen des brevets

(19)

(11) Veröffentlichungsnummer: **0 199 188**
**B1**

## (12) EUROPÄISCHE PATENTSCHRIFT

(45) Veröffentlichungstag der Patentschrift:
14.12.88

(21) Anmeldenummer: 86104855.1

(22) Anmeldetag: 09.04.86

(51) Int. Cl.⁴: **B 62 K 25/08**

(54) Vorderradaufhängung für ein Motorrad.

(30) Priorität: 18.04.85 DE 3513974

(43) Veröffentlichungstag der Anmeldung:
29.10.86 Patentblatt 86/44

(45) Bekanntmachung des Hinweises auf die Patenterteilung:
14.12.88 Patentblatt 88/50

(84) Benannte Vertragsstaaten:
DE FR GB IT

(56) Entgegenhaltungen:
GB-A-2 154 960

MOTORRAD, Heft 25, 5. Dezember 1984, Stuttgart G.
HEYL "Auf Tauchstation" S. 67-70

(73) Patentinhaber: **BAYERISCHE MOTOREN WERKE
Aktiengesellschaft, Postfach 40 02 40 Petuelring
130 - AJ- 36, D-8000 München 40 (DE)**

(72) Erfinder: **Baron, Günter, Krokusweg 8, D-8037 Neu-
Esting (DE)**

(74) Vertreter: **Dexheimer, Rolf, Bayerische Motoren
Werke Aktiengesellschaft Postfach 40 02 40
Petuelring 130 - AJ- 21, D-8000 München 40 (DE)**

**Beschreibung**

Die Erfindung bezieht sich auf eine Vorderradaufhängung für ein Motorrad der im Oberbegriff des Patentanspruchs 1 genannten und aus der DE-Zeitschrift "Motorrad" Heft 25/84; Seite 67 hervorgehenden Art.

Die bekannte Vorderradaufhängung weist zur Abstützung der unteren Gabelbrücke am Motorradrahmen zwei nach vorne konvergierende Lenkerarme auf. Diese sind an ihrem vorderen Ende über ein Kugelgelenk an der unteren Gabelbrücke angelenkt, während sie mit ihrem hinteren Ende über eine waagrechte Lagerwelle am Motorradrahmen schwenkbar gelagert sind. Beim Einfedern der Vorderradgabel - beispielsweise hervorgerufen durch das Bremsen - wird diese von den beiden Lenkerarmen zwar nach vorne gedrückt, dennoch entsteht bei diesem Vorgang eine unter Umständen größere Radstandveränderung.

Aufgabe der Erfindung ist es daher, eine Vorderradaufhängung der im Oberbegriff des Patentanspruchs 1 genannten Gattung derart auszubilden, daß sich der Radstand beim Einfedern der Vorderradgabel nur geringfügig verändert.

Zur Lösung der Aufgabe sind die im kennzeichnenden Teil des Patentanspruchs 1 dargelegten Merkmale vorgesehen.

Durch den erfindungsgemäß vorgesehenen Winkelhebel wird über den Federweg der Vorderradaufhangung eine Radstandveränderung der Vorderradgabel - beispielsweise beim Bremsen - weitgehend verringert. Denn durch das Einfedern der Vorderradaufhangung wird das Kugelgelenk des Winkelhebels über den Führungslenker etwas noch vorne verlagert und hierdurch die Radstandveränderung wesentlich verringert. Nachdem hierbei der Motorradlenker vergleichsweise geringfügiger um das obere Kugelgelenk geschwenkt wird, wird hierdurch auch das Fahrgefühl verbessert; dies ist speziell bei einem Hochlenker von Bedeutung. Schleßlich ergibt sich durch die geringere Radstandveränderung beim Bremsen ein vergleichsweise längerer Nachlauf, was sich speziell hierbei sehr günstig auf die Fahrstabilität auswirkt.

Zweckmäßigerweise ragt der mit dem Führungslenker verbundene zweite Hebelarm des Winkelhebels nach oben (Merkmal des Patentanspruchs 2). Durch zwei nach oben abstehende Hebelarme kann diesen jeweils ein eigener, seinerseits am Motorradrahmen angelenkter Führungslenker zugeordnet werden; ferner sind im Eckbereich des Winkelhebels zwei im Abstand voneinander liegende Lenkerarme angelenkt (Merkmal des Patentanspruchs 3).

Durch eine unterschiedliche Bemessung der Längserstreckung der Lenkerarme, der Führungslenker und der zweiten Hebelarme des Winkelhebels sowie durch eine bestimmte Anordnung der rahmenseitigen Anlenkstellen von Lenkerarmen und Führungslenkern kann schließlich auch die Größe der Radstandveränderung variiert und gewünschtenfalls auf einen Mindestwert gebracht werden.

Ein Ausführungsbeispiel der Erfindung ist in der Zeichnung dargestellt und wird im folgenden erläutert. Es zeigt:

Fig. 1 eine perspektivische Gesamtansicht einer Motorrad-Vorderradaufhängung,
Fig. 2 eine Seitenansicht der Vorderradaufhängung

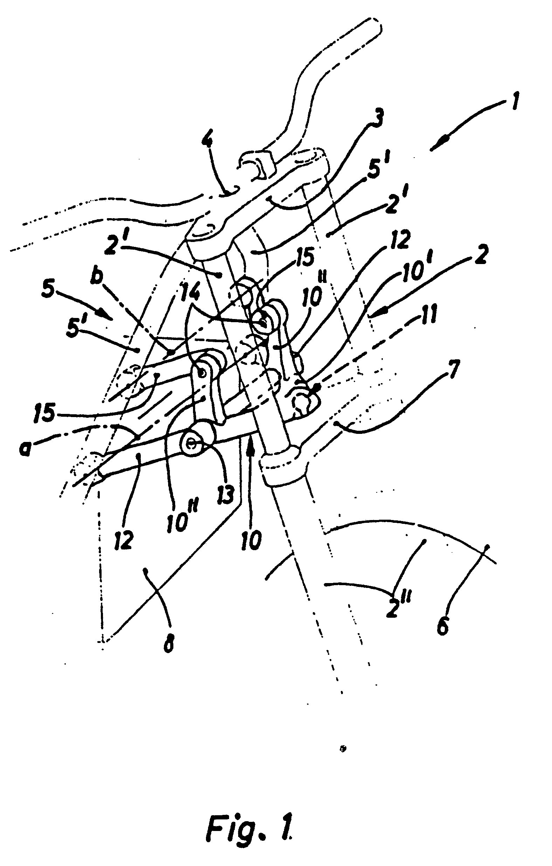

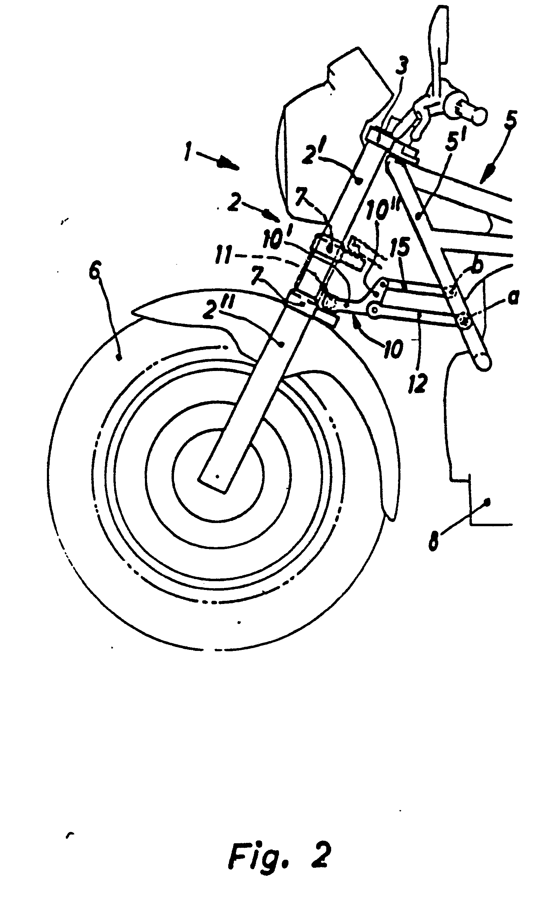

Die in den Figuren 1 und 2 dargestellte Vorderradaufhängung 1 eines Motorrads hat eine Vorderradgabel 2, die über ihre obere Gabelbrücke 3 durch ein Kugelgelenk 4 an dem sich nach oben erstreckenden Endbereich des Motorradrahmens 5 angelenkt ist. Dabei stehen von der oberen Gabelbrücke 3 zwei Standrohre 2' ab, über die zwei, durch eine untere Gabelbrücke 7 verbundene Gleitrohre 2" längsverschiebbar sind; an deren unterem Endabschnitt ist ein Vorderrad 6 drehbar gelagert. Die untere Gabelbrücke 7 ist in Draufsicht V-förmig gestaltet, wobei ihre Spitze zu einem am Motorradrahmen 5 befestigten Motorgetriebegehäuse 8 gerichtet ist.

Von der unteren Gabelbrücke 7 steht ein Kugelzapfen nach oben gerichtet ab, der in eine an der Unterseite eines Winkelhebels 10 vorgesehen Kugelpfanne eingreift. Diese bildet mit dem Kugelzapfen ein Kugelgelenk 11, deren Gelenkmittelpunkt in der Radmittelebene des Vorderrads 6 liegt. Der Winkelhebel 10 ist in Draufsicht V-förmig gestaltet, wobei sich die Kugelpfanne in einem nach vorne gerichteten ersten Hebelarm 10' befindet, während im rückwärtigen Eckbereich des Winkelhebels 10 sowie an dessen Außenseiten zwei Lenkerarme 12 über eine Lagerwelle 13 angelenkt sind. Die Lenkerarme 12 sind ihrerseits mit ihren rückwärtigen Endabschnitten jeweils an den vorderen, seitlichen Rahmenabschnitten 5' des Motorradrahmens um eine waagrecht verlaufende Querachse a schwenkbar gelagert; benachbart dieser sind die Rahmenabschnitte 5' mit dem Motorgetriebgehäuse 8 verschraubt.

Wie in den Figuren 1 und 2 ersichtlich, sind an der Rückseite des Winkelhebels 10, also in seinem Eckbereich, zwei nach oben abstehende zweite Hebelarme 10" vorgesehen, welche in Abstand voneinander liegen und miteinander fluchten. An deren oberen Endabschnitten ist über jeweils einen Lagerbolzen 14 ein Führungslenker 15 angelenkt, welche mit ihren rückwärtigen Endabschnitten an den Rahmenabschnitten 5' des Motorradrahmens 5 schwenkbar gelagert sind; dabei verläuft die Querachse b der Führungslenker 15 parallel zur Querachse a der Lenkerarme 12. Sowohl die Lenkerarme 12 als auch die Führungslenker 15 verlaufen in Draufsicht symmetrisch konvergierend zum Winkelhebel 10 hin. Ferner verlaufen die Lenkerarme 12 und die Führungslenker 15 abstandsparallel zueinander und erstrecken sich beim Ausführungsbeispiel in Ruhelage der Vorderradgabel 2 von ihrer rahmenseitigen Anlenkstelle zum Winkelhebel 10 hin schräg nach oben (Fig. 2). Der maximal mögliche Einfederungsweg der Vorderradgabel 2 ist in Fig. 2 mit gestrichelten Linien dargestellt.

Durch die geschilderte Anlenkung der Vorradgabel 2 über den Winkelhebel 10, die Lenkerarme 12 und Führungslenker 15 am Motorradrahmen 5 wird über den Federweg der Vorderradgabel 2 bei deren Einfedern - beispielsweise beim Bremsen - das Kugelgelenk 11 des Winkelhebels 10 hauptsächlich durch das nach vorne Schwenken der Endabschnitte der zweiten Hebelarme 2″ etwas nach vorne verlagert und aufgrund dessen die hierbei entstehende Radstandveränderung des Vorderrads 6 weitgehend verringert: da hierbei der Nachlauf im Vergleich zum Stand der Technik länger ist, wirkt sich dies speziell beim Bremsen vorteilhaft auf die Fahrstabilität aus.

Durch eine entsprechende rahmenseitige Anlenkung der Lenkerarme 12 und Führungslenker 15 sowie durch eine unterschiedliche Bemessung von deren Längserstreckung und der Längserstreckung der zweiten Hebelarme 10″ des Winkelhebels 10 kann bedarfsweise der Radstand des Vorderrads 6 bis auf einen Mindestwert verringert oder es kann auch eine definierte Größe vorgesehen werden, wobei sich natürlich auch der Steuerkopfwinkel variieren läßt. Im Extremfall kann sogar die Vorderradgabel 2 über ihre Ruhelage nach vorne hinaus verlagert werden.

## Patentansprüche

1. Vorderradaufhängung für ein Motorrad, mit einer eine obere und untere Gabelbrücke aufweisenden Vorderradgabel, wobei die obere Gabelbrücke über ein Kugelgelenk oder dgl. am Motorradrahmen angelenkt ist, während die untere Gabelbrücke mit diesem über wenigstens einen Lenkerarm verbunden ist, der mit seinem hinteren Ende am Motorradrahmen um eine Querachse schwenkbar gelagert und mit seinem vorderen Ende über ein in der Radmittenebene liegendes Kugelgelenk an der unteren Gabelbrücke angelenkt ist, gekennzeichnet durch einen Winkelhebel (10), der in seinem Eckbereich über eine ecksteife Querachse an dem vorderen Ende des Lenkerarms (Lenkerarme 12) angelenkt ist und der mit einem nach vorne gerichteten, ersten Hebelarm (10') mit der unteren Gabelbrücke (7) und mit einem zu diesem im Winkel abstehenden zweiten Hebelarm (10″) gelenkig mit einem Führungslenker (15) verbunden ist, der seinerseits um eine Querachse (b) schwenkbar am Motorradrahmen (5) angelenkt ist.

2. Vorderradaufhängung nach Anspruch 1, dadurch gekennzeichnet, daß der mit dem Führungslenker (15) verbundene zweite Hebelarm (10″) des Winkelhebels (10) nach oben gerichtet ist.

3. Vorderradaufhängung nach Anspruch 1, mit zwei nach vorne konvergierenden Lenkerarmen, dadurch gekennzeichnet, daß der Winkelhebel (10) zwei nach oben abstehende, im Abstand voneinander liegende sowie miteinander fluchtende Hebelarme (10″) aufweist, denen jeweils ein eigener Führungslenker (15) zugeordnet ist, während die Lenkerarme (12) im Eckbereich des Winkelhebels angelenkt sind.

## Claims

1. A front wheel suspension for a motor cycle, with a front fork comprising an upper and a lower fork bridge piece, the upper fork bridge piece being articulated through a ball joint or the like to the motor cycle frame while the lower fork bridge piece is connected with the frame through at least one link arm which is pivotably mounted about a transverse axis with its rear end on the motor cycle frame and is articulated with its forward end on the lower fork bridge piece through a ball joint lying in the central plane of the wheel, characterized by a bell-crank lever (10) which is pivoted, in its corner region by means of a transverse spindle, rigidly mounted in the said corner region, to the forward end of the link arm (link arms 12) and which is connected by a forwardly directed first lever arm (10') with the lower fork bridge piece (7) and, by a second lever arm (10″) extending at an angle therefrom, pivotally connected with a guide link (15) which in turn is pivotally connected to the motor cycle frame (5) pivotably about a transverse axis (b).

2. A front wheel suspension according to Claim 1, characterized in that the second lever arm (10″) of the bell-crank lever (10), which is connected with the guide link (15), is directed upwards.

3. A front wheel suspension according to Claim 1, having two forwardly converging link arms, characterized in that the bell-crank lever (10) comprises two upwardly protruding, mutually spaced and mutually aligned lever arms (10″), to each of which there is allocated its own guide link (15), while the link arms (12) are attached pivotally in the corner region of the bell-crank lever.

## Revendications

1. Suspension de roue avant pour une motocyclette, avec une fourche de roue avant comportant un pont supérieur de fourche et un pont inférieur de fourche, le pont supérieur de fourche étant articulé au cadre de la motocyclette par l'intermédiaire d'une articulation sphérique ou d'une articulation analogue, tandis que le pont inférieur est relié à ce cadre par l'intermédiaire d'au moins un bras oscillant, dont l'extrémité arrière est montée sur ce cadre de la motocyclette de façon à pouvoir pivoter autour d'un axe transversal et dont l'extrémité avant est articulée au pont inférieur de la fourche par l'intermédiaire d'une articulation sphérique placée dans le plan médian de la roue, suspension caractérisée en ce qu'elle comporte un levier en équerre (10) qui est articulé dans sa zone d'angle, par l'intermédiaire d'un axe transversal rigidement solidaire de cette zone d'angle, à l'extrémité avant du bras oscillant (bras oscillant 12) et qui, avec un premier bras de levier (10') orienté vers l'avant, est relié au pont inférieur (7) de la fourche tandis que par un second bras de levier (10''), s'écartant angulairement de ce premier bras de levier, il est relié par articulation à une bielle de guidage (15), qui de son côté est articulée sur le cadre (5) de la motocyclette, de façon à pouvoir pivoter autour d'un axe transversal (b).

2. Suspension de roue avant, selon la revendication 1, caractérisée en ce que le second bras de levier (10''), relié à la bielle de guidage (15), du levier angulaire (10), est dirigé vers le haut.

3. Suspension de roue avant selon la revendication 1, avec deux bras oscillants convergeant vers l'avant, suspension caractérisée en ce que le levier en équerre (10) comporte deux bras de levier (10''), faisant saillie vers le haut, écartés l'un de l'autre et alignés l'un sur l'autre, à chacun desquels est associée une bielle de guidage distincte, tandis que les bras oscillants (12) sont articulés dans la zone d'angle du levier en équerre.

**Fig. 1.**

**Fig. 2**